# EUROPEAN PATENT APPLICATION

(11) **EP 4 075 406 A1**
(43) Date of publication of application: **19.10.2022**
(21) Application number: 19956002.0
(22) Date of filing: 13.12.2019
(51) Int. Cl.: G08G 1/00, B60W 30/10, G16Y 10/40

(54) **AUTOMATED DRIVING AND DRIVING SUPPORT SYSTEM, AUTOMATED DRIVING SUPPORT DEVICE, AUTOMATICALLY DRIVEN VEHICLE, AUTOMATED DRIVING AND DRIVING SUPPORT METHOD, AUTOMATED DRIVING SUPPORT METHOD, AUTOMATED DRIVING METHOD, AUTOMATED DRIVING SUPPORT PROGRAM, AND AUTOMATED DRIVING PROGRAM**

(71) Applicant: MITSUBISHI ELECTRIC CORPORATION, Chiyoda-ku Tokyo 100-8310 (JP)
(72) Inventor: NISHIWAKI Takeshi, Tokyo 100-8310 (JP); WADA Yuta, Tokyo 100-8310 (JP); ITO Masuo, Tokyo 100-8310 (JP)
(74) Representative: Hoffmann Eitle
(86) International application number: PCT/JP2019/048881
(87) International publication number: WO 2021/117214

(57) **Abstract**

To provide an automatic driving and driving support system, an automatic driving support apparatus, an automatic driving vehicle, and the like which can make the automatic driving vehicle generate the target traveling track suitable for the front road state which cannot be detected by the automatic driving vehicle, while suppressing the increase in the calculation processing load of the automatic vehicle. In an automatic driving and driving support system, when the target traveling track is acquired from the preceding vehicle which precedes and travels the same lane as a lane of the scheduled traveling route acquired from the support object vehicle, the automatic driving support apparatus (50) transmits the target traveling track to the support object vehicle; and the automatic driving vehicle generates the target traveling track of the own vehicle based on the acquired target traveling track of the preceding vehicle.

## Description

### TECHNICAL FIELD

The present disclosure relates to an automatic driving and driving support system, an automatic driving support apparatus, an automatic driving vehicle, an automatic driving and driving support method, an automatic driving support method, an automatic driving method, an automatic driving support program, and an automatic driving program

### BACKGROUND ART

Recently, as the traveling configuration of vehicle, other than the manual traveling which travels based on the driving operation of user, the automatic driving vehicle which assists the vehicle operation of user by performing the driving operation of user on the vehicle side is proposed. In the automatic driving vehicle, for example, the current position of vehicle, the traveling lane of vehicle, the position of around other vehicle, and the like are detected at all times, and the vehicle control of the driving source and the brake is automatically performed so as to travel along the preliminarily set route.

Herein, in order to perform the automatic driving appropriately, it is important to grasp the periphery state correctly on the vehicle side. As the means to grasp the periphery state, information detected by camera and sensor installed in the vehicle, and information acquired from the external server and other vehicles by communication are used.

For example, in the technology of PLT 1, the automatic driving vehicle acquires the information of the obstacle from the outside, such as the preceding vehicle, and generates the target traveling track of the own vehicle using the information of the acquired obstacle . The obstacle which exists in the position which cannot be grasped from the current position of the own vehicle is perceived beforehand, and the target traveling track for avoiding the obstacle can be generated with a margin.

### CITATION LIST

### Patent Literature

PLT 1: JP 2017-117080 A

### SUMMARY OF INVENTION

### Technical Problem

However, in the technology of PLT 1, the automatic driving vehicle needs to perform calculation for generating the target traveling track of the own vehicle using the information of the obstacle acquired from the outside. The calculation for generating the target traveling track needs to repeat geometric calculation, and its computation load is large.

As number of the information of the obstacle acquired from the outside increases, the computation load of the target traveling track increases. Accordingly, it is necessary to equip an arithmetic processor with high processing ability, supposing the maximum number of the information of the obstacle, and it causes the cost increase of the automatic driving vehicle.

Then, the purpose of the present disclosure is to provide an automatic driving and driving support system, an automatic driving support apparatus, an automatic driving vehicle, and the like which can make the automatic driving vehicle generate the target traveling track suitable for the front road state which cannot be detected by the automatic driving vehicle, while suppressing the increase in the calculation processing load of the automatic driving vehicle.

### Solution to Problem

The automatic driving and driving support system according to the present disclosure, including:
a plurality of automatic driving vehicles driving automatically, and
an automatic driving support apparatus supporting automatic driving of the plurality of automatic driving vehicles,
wherein the automatic driving vehicle including:
   a scheduled route generation unit that generates a scheduled traveling route from a current point to a target point, and transmits the generated scheduled traveling route to the automatic driving support apparatus, and
   a target track generation unit that generates a target traveling track for making an own vehicle follow, and transmits the generated target traveling track to the automatic driving support apparatus,
wherein the automatic driving support apparatus including:
   a scheduled route acquisition unit that acquires the scheduled traveling route from the automatic driving vehicle,
   a target track acquisition unit that acquires the target traveling track from the automatic driving vehicle, and
   a preceding vehicle track transmitting unit that, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmits the acquired target traveling track to the support object vehicle,
wherein the target track generation unit, when the target traveling track of the preceding vehicle is acquired from the automatic driving support apparatus, generates the target traveling track of the own vehicle based on the acquired target traveling track of the preceding vehicle.

An automatic driving support apparatus according to the present disclosure, including:
a scheduled route acquisition unit that acquires a scheduled traveling route from an automatic driving vehicle,
a target track acquisition unit that acquires a target traveling track from the automatic driving vehicle, and
a preceding vehicle track transmitting unit that, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmits the acquired target traveling track of the preceding vehicle to the support object vehicle, and makes the support object vehicle generate the target traveling track of an own vehicle based on the target traveling track of the preceding vehicle.

An automatic driving vehicle according to the present disclosure, including:
a scheduled route generation unit that generates a scheduled traveling route from a current point to a target point, and transmits the generated scheduled traveling route to an automatic driving support apparatus,
a target track generation unit that generates a target traveling track for making an own vehicle follow, and transmits the generated target traveling track to the automatic driving support apparatus, and
a preceding vehicle track acquisition unit that acquires the target traveling track of a preceding vehicle which is an other vehicle which precedes and travels the same lane as a lane of the scheduled traveling route or a current traveling lane of the own vehicle, from the automatic driving support apparatus,
wherein, when the target traveling track of the preceding vehicle is acquired, the target track generation unit generates the target traveling track of the own vehicle based on the acquired target traveling track of the preceding vehicle.

### Advantage of Invention

According to the automatic driving and driving support system, the automatic driving support apparatus, the automatic driving vehicle, and the like of the present disclosure, since the target traveling track of the preceding vehicle is transmitted to the automatic driving vehicle, and the automatic driving vehicle can be made to generate the target traveling track of the own vehicle based on the target traveling track of the preceding vehicle, the automatic driving vehicle can be made to generate the target traveling track suitable for the front road state which cannot be detected by the automatic driving vehicle, while suppressing the increase in the processing load of the arithmetic processor of the automatic driving vehicle.

### BRIEF DESCRIPTION OF THE DRAWINGS

FIG. 1 is a schematic configuration diagram of the automatic driving and driving support system according to Embodiment 1;
FIG. 2 is a schematic block diagram of the automatic driving apparatus according to Embodiment 1;
FIG. 3 is a hardware configuration diagram of the automatic driving controller according to Embodiment 1;
FIG. 4 is a figure showing an example of the target traveling track having the lane change for avoiding the obstacle according to Embodiment 1;
FIG. 5 is a figure showing the example of data of the target traveling track according to Embodiment 1;
FIG. 6 is a flowchart for explaining the generation and transmission processing of the target traveling track according to Embodiment 1;
FIG. 7 is a figure for explaining determination of presence or absence of the lane change according to Embodiment 1;
FIG. 8 is a schematic block diagram of the automatic driving support apparatus according to Embodiment 1;
FIG. 9 is a hardware configuration diagram of the automatic driving support apparatus according to Embodiment 1;
FIG. 10 is a figure for explaining expansion and contraction correction of the lane change section of the target traveling track according to the travelling speed of the support object vehicle according to Embodiment 1;
FIG. 11 is a flowchart for explaining outline processing of the automatic driving and driving support system, the automatic driving support apparatus, and the automatic driving vehicle according to Embodiment 1;
FIG. 12 is a flowchart for explaining processing of the target track acquisition and storage according to Embodiment 1; and
FIG. 13 is a flowchart for explaining processing of the preceding vehicle track transmitting according to Embodiment 2.

### DETAILED DESCRIPTION OF THE EMBODIMENTS

### 1. Embodiment 1

An automatic driving and driving support system according to Embodiment 1 will be explained with reference to drawings. The automatic driving and driving support system is provided with a plurality of automatic driving vehicles which drive automatically, and an automatic driving support apparatus 50 which supports automatic driving of the plurality of automatic driving vehicles. Each automatic driving vehicle is provided with an automatic driving apparatus 30.

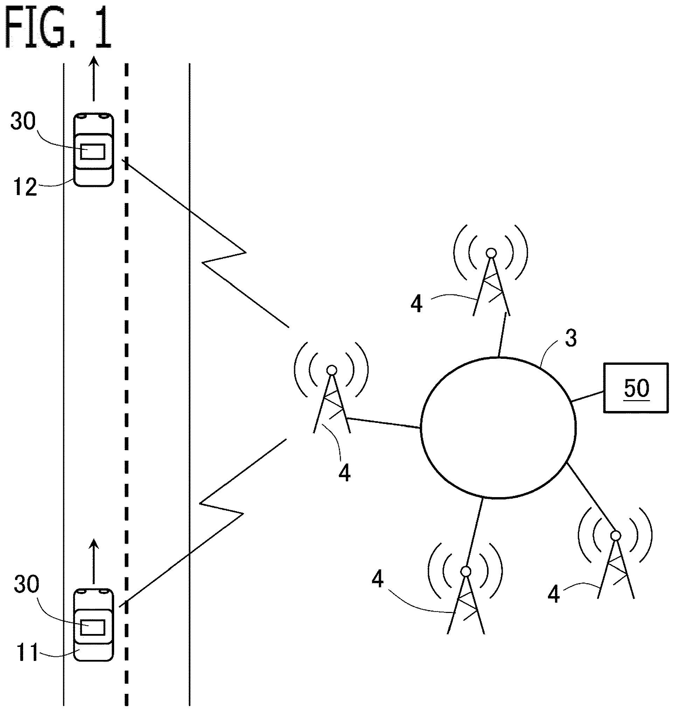

FIG. 1 is a schematic diagram showing the automatic driving and driving support system. The automatic driving support apparatus 50 is provided in a server connected to a network 3. The automatic driving apparatus 30 of each automatic driving vehicle is connected to a near base station 4 by a wireless communication. A plurality of base stations 4 are distributed and provided at each point so as to cover a road network. The base station 4 is a radio station which performs a wireless communication with the automatic driving apparatus 30 mounted in a vehicle which exists in the communication area, using the wireless communication standard of cellular communication system, such as 4G and 5G, and is connected to the network 3. Accordingly, the automatic driving apparatus 30 of each automatic driving vehicle and the automatic driving support apparatus 50 are communicatively connected via the base station 4 and the network 3.

FIG. 1 shows the two automatic driving vehicles 11, 12 (referred to as the first vehicle 11 and the second vehicle 12) which constitute the automatic driving and driving support system. For example, when the first vehicle 11 is set as the support object vehicle which is a vehicle supported, the second vehicle 12 becomes a preceding vehicle of the first vehicle 11.

### 1-1. Automatic Driving Apparatus 30

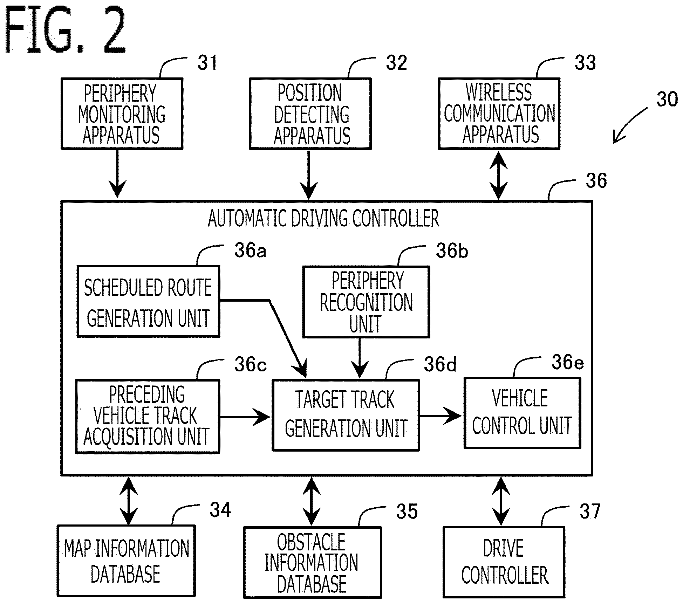

First, the basic configuration of the automatic driving apparatus 30 mounted in each automatic driving vehicle will be explained. As shown in FIG. 2, the automatic driving apparatus 30 is provided with a periphery monitoring apparatus 31, a position detecting apparatus 32, a wireless communication apparatus 33, a map information database 34, an obstacle information database 35, an automatic driving controller 36, a drive controller 37, and the like.

The periphery monitoring apparatus 31 is apparatus which monitor the periphery of the vehicle, such as a camera and a radar. As the radar, a millimeter wave radar, a laser radar, an ultrasonic radar, and the like are used. The position detecting apparatus 32 is an apparatus which detects the current position of the own vehicle, and a GPS antenna which receives the signal outputted from satellites, such as GNSS (Global Navigation Satellite System), is used. The wireless communication apparatus 33 performs a wireless communication with the base station 4, using the wireless communication standard of cellular communication system, such as 4G and 5G.

In the map information database 34, road information, such as the road shape and the lane, the road sign, and the road signal, is stored. In the obstacle information database 35, the type, the road position, and the lane of the obstacle which obstructs traveling of vehicles, such as the road construction information, the stopping vehicle, and the falling object, are stored. In the obstacle information database 35, the information of the obstacle distributed from the server outside the vehicle, such as the road state monitoring system and the automatic driving support apparatus 50, is stored. The map information database 34 and the obstacle information database 35 may be provided in the server outside the vehicle connected to the network 3, and the automatic driving controller 36 may acquire necessary map information and obstacle information from the server outside the vehicle via the wireless communication apparatus 33.

As the drive controller 37, a power controller, a brake controller, an automatic steering controller, a light controller, and the like are provided. The power controller controls output of power machine, such as an internal combustion engine and a motor. The brake controller controls brake operation of an electric brake apparatus. The automatic steering controller controls an electric steering apparatus. The light controller controls a direction indicator and the like.

### 1-1-1. Automatic Driving Controller 36

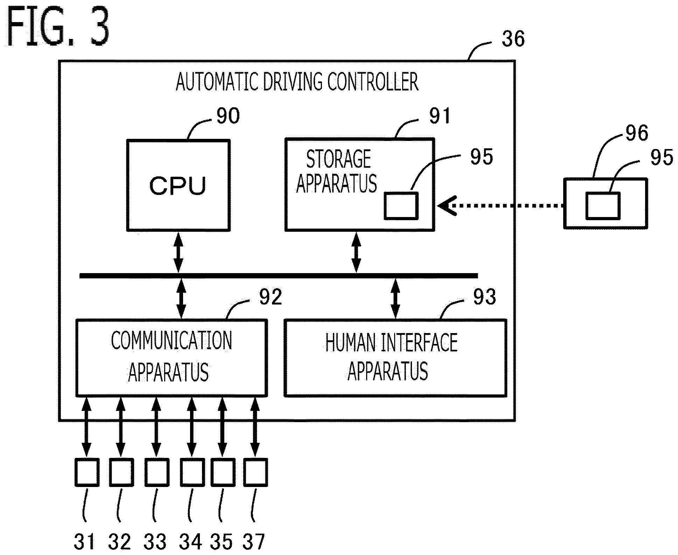

The automatic driving controller 36 is provided with functional units, such as a scheduled route generation unit 36a, a periphery recognition unit 36b, a preceding vehicle track acquisition unit 36c, a target track generation unit 36d, and a vehicle control unit 36e. Each functional unit 36a to 36e of the automatic driving controller 36 is realized by processing circuits provided in the automatic driving controller 36. For example, as shown in FIG. 3, the automatic driving controller 36 is provided, as the processing circuits, with an arithmetic processor (computer) 90 such as a CPU (Central Processing Unit), a storage apparatus 91 which exchanges data with the arithmetic processor 90, a communication apparatus 92 which communicates between the arithmetic processor 90 and the external apparatuses, a human interface apparatus 93, and the like. As the external apparatus, the periphery monitoring apparatus 31, the position detecting apparatus 32, the wireless communication apparatus 33, the map information database 34, the obstacle information database 35, the drive controller 37 and the like are provided.

As the arithmetic processor 90, DSP (Digital Signal Processor), ASIC (Application Specific Integrated Circuit), IC (Integrated Circuit), FPGA (Field Programmable Gate Array), a neural processing chip, various kinds of logical circuits, various kinds of signal processing circuits, and the like may be provided. As the arithmetic processor 90, a plurality of the same type ones or the different type ones may be provided, and each processing may be shared and executed. As the storage apparatus 91, RAM (Random Access Memory), ROM (Read Only Memory), EEPROM (Electrically Erasable Programmable Read Only Memory), a hard disk (HDD), and the like are provided.

Then, the arithmetic processor 90 runs software items (programs) stored in the storage apparatus 91 such as the hard disc and collaborates with other hardware devices, such as the storage apparatus 91, the communication apparatus 92, and the external apparatuses, so that the respective functions of the functional units 36a to 36e provided in the automatic driving controller 36 are realized. Setting data utilized in the functional units 36a to 36e are stored, as part of software items (programs), in the storage apparatus 91 such as the hard disc. A non-transitory computer-readable recording medium 96 storing the automatic driving program 95 may be distributed, and the automatic driving program 95 may be installed in the automatic driving controller 36 (the storage apparatus 91).

### 1-1-1-1. Scheduled Route Generation Unit 36a

The scheduled route generation unit 36a generates a scheduled traveling route from a current point to a target point. The scheduled route generation unit 36a generates the scheduled traveling route, based on the current position of the own vehicle obtained from the position detecting apparatus 32, the target point, the map information acquired from the map information database 34, and the road state. The automatic driving controller 36 is provided with the human interface apparatus 93, and receives setting of the target point by a passenger.

The scheduled traveling route is a traveling plan longer-term than the target traveling track described below. In the scheduled traveling route, a scheduled traveling road, a scheduled traveling lane, a target traveling speed, and the like are set. For example, if there are a plurality of lane numbers of the scheduled traveling road, the scheduled traveling lane is set considering merging or leaving at the junction point or the branch point of the road, right or left turn, target traveling speed, and the like. The scheduled traveling lane may not be included in the scheduled traveling route.

The scheduled route generation unit 36a transmits the generated scheduled traveling route to the automatic driving support apparatus 50 via the wireless communication apparatus 33. In data of this transmitted scheduled traveling route, the vehicle type information of the own vehicle is also included. The vehicle type information is "passenger car", "large-sized cargo vehicle", "trailer", and the like. The scheduled route generation unit 36a transmits the current traveling information of the own vehicle (the position of the own vehicle, the traveling lane, the traveling direction, the travelling speed, and the like) to the automatic driving support apparatus 50 via the wireless communication apparatus 33.

### 1-1-1-2. Periphery Recognition Unit 36b

The periphery recognition unit 36b recognizes the traveling condition around the own vehicle. The periphery recognition unit 36b recognizes a peripheral traveling state, such as a traveling state of peripheral vehicle, and a state of traveling road, based on the peripheral information acquired from the periphery monitoring apparatus 31, the position information of the own vehicle detected by the position detecting apparatus 32, the map information around the own vehicle acquired from the map information database 34, and the obstacle information around the own vehicle acquired from the obstacle information database 35. As the traveling state of peripheral vehicle, the position, the speed, the traveling direction, the traveling lane, the size, the vehicle type, and the like of the peripheral vehicle are recognized. As the state of traveling road, the road shape, the lane, the presence or absence of obstacle, the presence or absence of pedestrian, the road sign information, the road traffic rule, such as the prohibition section of lane change, the signal information, the traffic congestion information, and the like are recognized. The periphery recognition unit 36b transmits the information of the detected obstacle (the position, the shape, the lane, and the like) to the automatic driving support apparatus 50 via the wireless communication apparatus 33.

### 1-1-1-3. Preceding Vehicle Track Acquisition Unit 36c

The preceding vehicle track acquisition unit 36c acquires the target traveling track of the preceding vehicle which is an other vehicle which precedes and travels the same lane as the lane of the scheduled traveling route or the current traveling lane of the own vehicle, from the automatic driving support apparatus 50.

### 1-1-1-4. Target Track Generation Unit 36d

The target track generation unit 36d generates a target traveling track of the own vehicle for making the own vehicle follow. The target traveling track is a target traveling track from the current position to a prescribed distance ahead or a predetermined period ahead, and is a track of short distance.

When the target traveling track of the preceding vehicle was acquired from the automatic driving support apparatus 50 by the preceding vehicle track acquisition unit 36c, the target track generation unit 36d generates the target traveling track of the own vehicle based on the acquired target traveling track of the preceding vehicle.

At this time, considering the peripheral traveling state, such as the traveling state of peripheral vehicle and the state of traveling road, which is recognized by the periphery monitoring apparatus 31, the map information database 34, and the obstacle information database 35, if necessary, the target track generation unit 36d corrects the target traveling track of the preceding vehicle, and generates the target traveling track of the own vehicle. For example, when the own vehicle travels along the target traveling track of the preceding vehicle, and there is an adjacent vehicle which becomes an obstacle, an obstacle, or the like. The target track generation unit 36d corrects the target traveling track of the preceding vehicle so as to avoid contact with the adjacent vehicle, the obstacle, or the like, and generates the target traveling track of the own vehicle. The target track generation unit 36d corrects the target traveling track of the preceding vehicle in accordance with the road shape, the lane, the signal information, and the like which were recognized, and generates the target traveling track of the own vehicle. On the other hand, if it is not necessary to correct the target traveling track of the preceding vehicle, the target track generation unit 36d sets the target traveling track of the preceding vehicle as the target traveling track of the own vehicle.

On the other hand, when the target traveling track of the preceding vehicle is not acquired from the automatic driving support apparatus 50, the target track generation unit 36d generates the target traveling track of the own vehicle, based on the scheduled traveling route. The target track generation unit 36d generates the target traveling track of the own vehicle for traveling along the scheduled traveling route in accordance with the recognized peripheral traveling state.

For example, when an obstacle, such as a stopping vehicle, a low speed vehicle, a pedestrian, a construction site, or a decrease of lane, is detected in front of the traveling lane of the own vehicle by the periphery monitoring apparatus 31 or the obstacle information database 35, the target track generation unit 36d determines the target traveling track which avoids the obstacle. For example, the target track generation unit 36d determines the target traveling track having a lane change for avoiding the obstacle. When a road shape different from the map information was recognized by the periphery monitoring apparatus 31, the target track generation unit 36d determines the target traveling track in accordance with the recognized road shape. When a sign information or a signal information was recognized by the periphery monitoring apparatus 31, the target track generation unit 36d determines the target traveling track in accordance with the recognized sign information or the recognized signal information.

When it is not necessary to change from the lane of the scheduled traveling route, the target track generation unit 36d determines the target traveling track which travels the same lane as the lane of the scheduled traveling route. Even in this case, the target traveling track of the own vehicle in accordance with the sign information or the signal information recognized by the periphery monitoring apparatus 31 while maintaining a vehicle distance between the own vehicle and the front vehicle is generated.

### <Example of target traveling track>

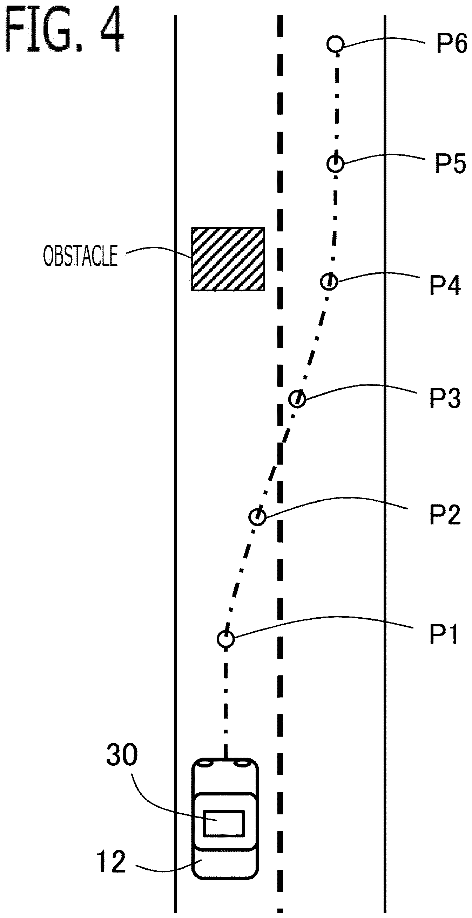

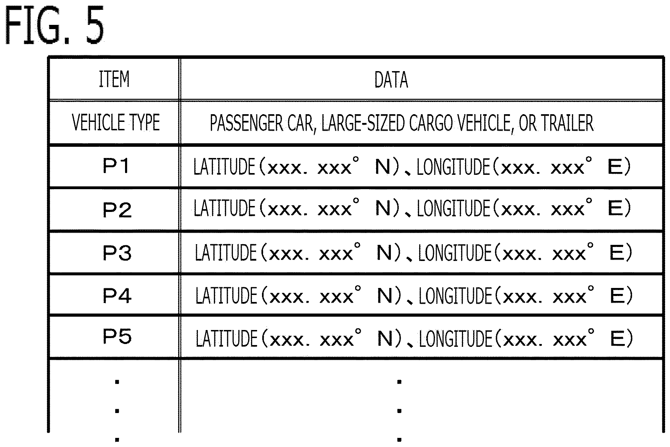

FIG. 4 shows an example where the target traveling track having a lane change for avoiding the obstacle detected in front of the traveling lane of the own vehicle is generated, when the target traveling track of the preceding vehicle is not acquired. As shown in FIG. 5, data of the target traveling track has coordinate data (latitude, longitude) of a plurality of reference points P1, P2, ... which are set at a predetermined interval. A line which connects the plurality of reference points P1, P2, ... becomes the target traveling track. The data of the target traveling track also has the vehicle type information of the own vehicle.

### <Transmission of target traveling track>

The target track generation unit 36d transmits the generated target traveling track of the own vehicle to the automatic driving support apparatus 50 via the wireless communication apparatus 33. This data of the target traveling track for transmitting also includes the vehicle type information of the own vehicle.

### <Setting of transmission condition>

In the present embodiment, when a specific transmission condition is established, the target track generation unit 36d transmits the generated target traveling track to the automatic driving support apparatus 50.

For example, when the obstacle is detected in front of the traveling lane of the own vehicle by the periphery recognition unit 36b, and the target traveling track for changing lane for avoiding the obstacle is generated, the target track generation unit 36d transmits the generated target traveling track to the automatic driving support apparatus 50. At this time, the target track generation unit 36d may also transmit the information of the obstacle (position, shape, lane, and the like) which causes the lane change, to the automatic driving support apparatus 50.

When the target traveling track for merely changing lane is generated, the target track generation unit 36d may transmit the generated target traveling track to the automatic driving support apparatus 50. At this time, the target track generation unit 36d may also transmit a factor of the lane change to the automatic driving support apparatus 50.

When a different road shape from the map information was recognized by the periphery recognition unit 36b, and the target traveling track in accordance with the recognized road shape is generated, the target track generation unit 36d may transmit the generated target traveling track to the automatic driving support apparatus 50. When a target traveling track different from the scheduled traveling route is generated in accordance with the recognized peripheral traveling state, the automatic driving controller 36 may transmit the generated target traveling track to the automatic driving support apparatus 50.

The target track generation unit 36d may also transmit the content of the established transmission condition (for example, the lane change for avoiding the obstacle is included), to the automatic driving support apparatus 50.

In this way, since only the target traveling track useful for the succeeding vehicle is transmitted to the automatic driving support apparatus 50, increase in the data communication amount can be suppressed, and increase in the processing load of the automatic driving support apparatus 50 and the support object vehicle can be suppressed.

### <Example of flowchart of generation and transmission processing of target traveling track>

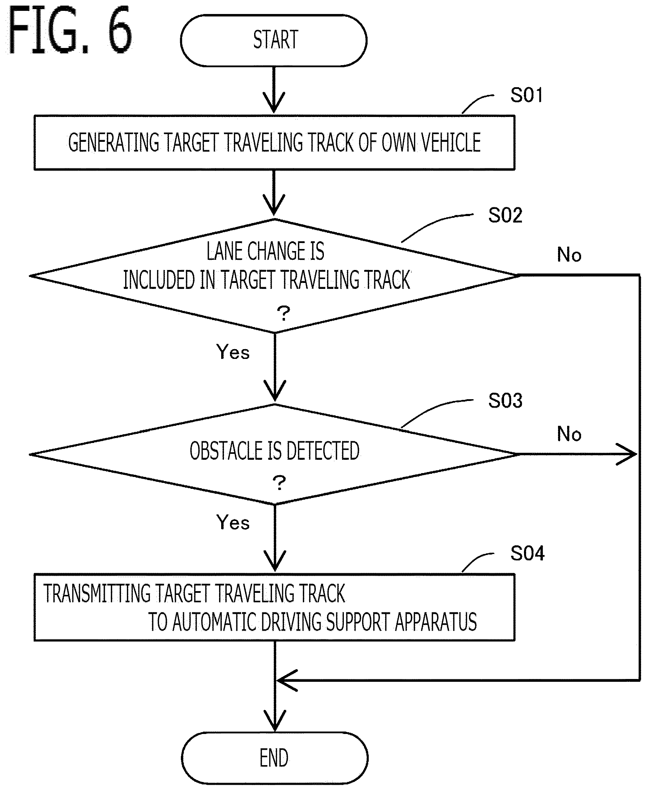

For example, the generation and transmission processing of the target traveling track can be constituted as the flowchart of FIG. 6. In the step S01, as mentioned above, the target track generation unit 36d generates the target traveling track of the own vehicle.

Then, in the step S02, the target track generation unit 36d determines whether the lane change is included in the generated target traveling track of the own vehicle. When the lane change is not included, the target track generation unit 36d ends processing, without transmitting the target traveling track to the automatic driving support apparatus 50. When the lane change is included, the target track generation unit 36d advances to the step S03.

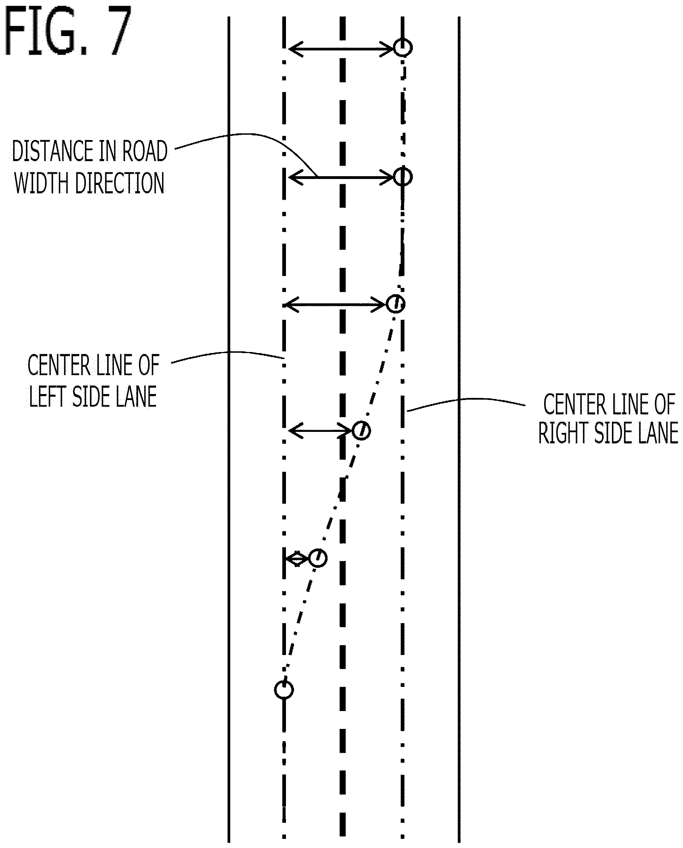

The example of the determination method whether the lane change is included will be explained using FIG. 7. In the example of FIG. 7, the lane change from the left side lane to the right side lane is performed. The center line of the left side lane and the center line of the right side lane are the information of the lane acquired from the map information database 34. About each reference point of the target traveling track, if there is the reference point which is apart from the center line of the left side lane corresponding to the current traveling lane by a preliminarily set determination distance (for example, 1/4 of the lane width) or more in the road width direction, it is determined that the lane change is included.

In the step S03, the target track generation unit 36d determines whether the obstacle was detected in front of the traveling lane of the own vehicle. When the obstacle is not detected, the target track generation unit 36d ends processing, without transmitting the target traveling track to the automatic driving support apparatus 50. When the obstacle was detected, the target track generation unit 36d advances to the step S04.

In the step S04, the target track generation unit 36d transmits the generated target traveling track to the automatic driving support apparatus 50. At this time, the vehicle type information of the own vehicle is also transmitted.

### 1-1-1-5. Vehicle Control Unit 36e

The vehicle control unit 36e controls the vehicle to follow the target traveling track of the own vehicle generated by the target track generation unit 36d. In the present embodiment, the vehicle control unit 36e decides a target speed, a target steering angle, an operation command of the direction indicator, and the like, and transmits each determined command value to the drive controller 37, such as the power controller, the brake controller, the automatic steering controller, and the light controller.

The power controller controls the output of power machine, such as the internal combustion engine and the motor, so that the speed of the own vehicle follows the target speed. The brake controller controls the brake operation of the electric brake apparatus so that the speed of the own vehicle follows the target speed. The automatic steering controller controls the electric steering apparatus so that the steering angle follows the target steering angle. The light controller controls the direction indicator according to the operation command of the direction indicator.

### 1-2. Automatic Driving Support Apparatus 50

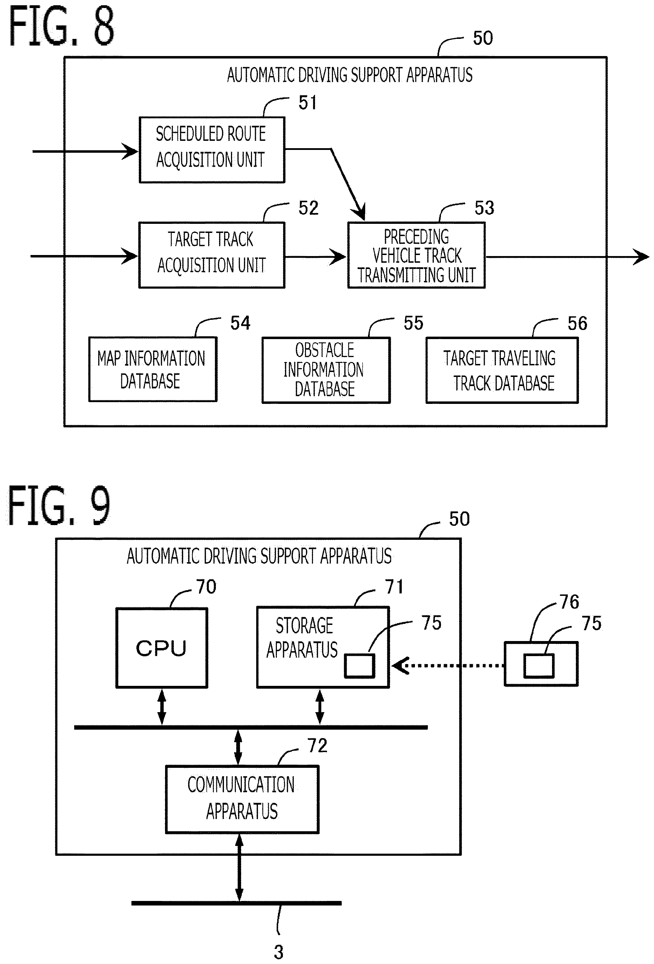

As shown in FIG. 8, the automatic driving support apparatus 50 is provided with a scheduled route acquisition unit 51, a target track acquisition unit 52, a preceding vehicle track transmitting unit 53, a map information database 54, an obstacle information database 55, a target traveling track database 56, and the like.

The function of each functional unit 51 to 56 of the automatic driving support apparatus 50 is realized by processing circuits provided in the automatic driving support apparatus 50. As shown in FIG. 9, the automatic driving support apparatus 50 is provided with an arithmetic processors 70 (computer), such as CPU, a storage apparatus 71, such as RAM, ROM, and a hard disk, a communication apparatus 72 which is connected to the network 3 and performs data communication, and the like.

In the storage apparatus 71, such as the hard disk, a program for each function, each database 54 to 56, and the like are stored. The arithmetic processor 70 runs programs (software items) stored in the storage apparatus 71 and collaborates with other hardware devices, such as the storage apparatus 71 and the communication apparatus 72, so that each processing of the automatic driving support apparatus 50 is realized. A non-transitory computer-readable recording medium 76 storing the automatic driving support program 75 may be distributed, and the automatic driving support program 75 may be installed in the automatic driving support apparatus 50 (the storage apparatus 71).

In the map information database 54, road information, such as the road shape and the lane, the road sign, and the road signal, is stored. In the obstacle information database 55, the type, the road position, and the lane of the obstacle which obstructs traveling of vehicles, such as road construction information, the stopping vehicle, and the falling object, are stored. In the obstacle information database 55, the information of the obstacle transmitted from the road state monitoring system and each automatic driving vehicle is stored.

### 1-2-1. Scheduled Route Acquisition Unit 51

The scheduled route acquisition unit 51 acquires the scheduled traveling route from each automatic driving vehicle. In the present embodiment, the scheduled route acquisition unit 51 receives the scheduled traveling route transmitted from the scheduled route generation unit 36a of each automatic driving vehicle. The scheduled route acquisition unit 51 also acquires the vehicle type information and the current traveling information (the position of vehicle, the traveling lane, the traveling direction, the travelling speed, and the like) from each automatic driving vehicle.

### 1-2-2. Target Track Acquisition Unit 52

The target track acquisition unit 52 acquires the target traveling track from each automatic driving vehicle. In the present embodiment, the target track acquisition unit 52 receives the target traveling track transmitted from the target track generation unit 36d of each automatic driving vehicle. The target track acquisition unit 52 also acquires the vehicle type information from each automatic driving vehicle. The received target traveling track is stored in the target traveling track database 56.

### 1-2-3. Preceding Vehicle Track Transmitting Unit 53

When the target traveling track is acquired from the preceding vehicle which precedes and travels the same lane as the lane of the scheduled traveling route acquired from the support object vehicle which is the automatic driving vehicle set as the object for supporting automatic driving or the current traveling lane of the support object vehicle, the preceding vehicle track transmitting unit 53 transmits the acquired target traveling track to the support object vehicle.

Although there are many automatic driving vehicles for supporting automatic driving, the automatic driving vehicle is set as the support object vehicle one by one, and processing is performed. For example, the preceding vehicle track transmitting unit 53 determines one or a plurality of preceding vehicles which precede and travel the same lane as a lane of a part of the scheduled traveling route close to the current position of the support object vehicle, and determines whether the target traveling track was acquired from each determined preceding vehicle. Alternatively, the preceding vehicle track transmitting unit 53 determines one or a plurality of preceding vehicles which precede and travel the same lane as the current traveling lane of the support object vehicle, and determines whether the target traveling track was acquired from each determined preceding vehicle. The preceding vehicle for determination is a preceding vehicle located within an object distance range in front of the current position of the support object vehicle.

### <Determination of vehicle type>

In case of the large-sized vehicle, a distance necessary for the lane change becomes long. In case of the small-sized vehicle, the distance necessary for the lane change becomes short. Accordingly, according to the vehicle type, the appropriate target traveling track for changing lane is different. Then, when the vehicle type of the support object vehicle and the vehicle type of the preceding vehicle coincide with each other, the preceding vehicle track transmitting unit 53 transmits the target traveling track of the preceding vehicle to the support object vehicle. According to this configuration, the appropriate target traveling track of the preceding vehicle of the same vehicle type suitable for the vehicle type of the support object vehicle can be transmitted.

### <Expansion and contraction of lane change section according to speed>

Even for the same vehicle type, as the travelling speed is fast, the distance necessary for the lane change becomes long. Accordingly, according to a travelling speed, the appropriate target traveling track for changing lane is different. Then, the preceding vehicle track transmitting unit 53 calculates a target lane change distance by multiplying the travelling speed of the support object vehicle to a preliminarily set target lane change period. Then, when the lane change is included in the target traveling track of the preceding vehicle, the preceding vehicle track transmitting unit 53 corrects the target traveling track of the preceding vehicle, to a traveling track that changes lane from a point before a completion point of the lane change by the target lane change distance, and transmits the target traveling track of the preceding vehicle after correction to the support object vehicle.

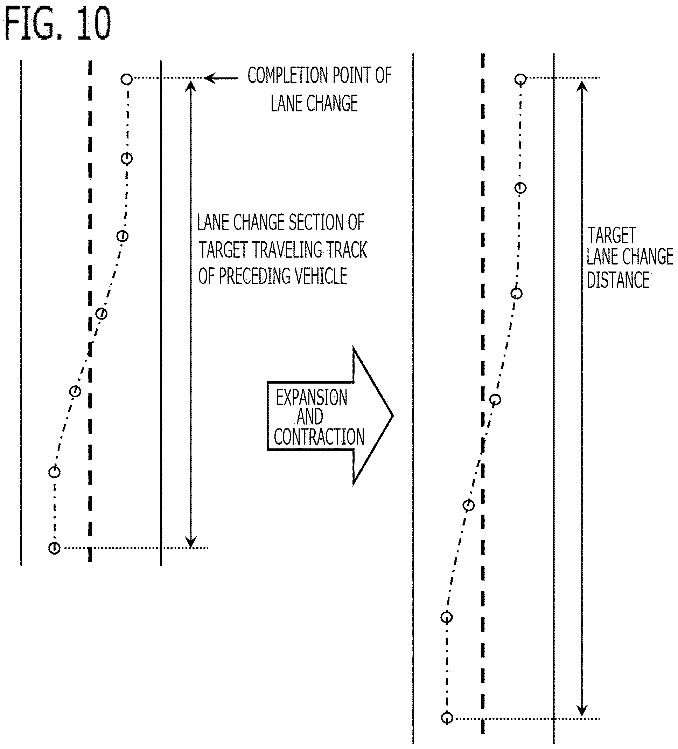

The preceding vehicle track transmitting unit 53 determines whether the lane change is included in the target traveling track of the preceding vehicle. The method explained using FIG. 7 is used for this determination. About reference points of the target traveling track, if there is the reference point which is apart from the center line of the lane corresponding to the starting point of the target traveling track by a preliminarily set determination distance (for example, 1/4 of the lane width) or more in the road width direction, it can be determined that the lane change is included. Then, as shown in FIG. 10, the preceding vehicle track transmitting unit 53 determines a lane change section of the target traveling track of the preceding vehicle, based on a distance in the road width direction of each reference point of the target traveling track with respect to the center line of the lane before the lane change and the center line of the lane after the lane change. Then, the preceding vehicle track transmitting unit 53 expands and contracts the target traveling track of the lane change section of the preceding vehicle in the traveling direction of the road without moving the completion point of the lane change, so that the lane change section becomes the target lane change distance. The preceding vehicle track transmitting unit 53 transmits the target traveling track after expansion and contraction, to the support object vehicle.

### <Setting of transmission condition>

In the present embodiment, as mentioned above, when the specific transmission condition is established, the target track generation unit 36d of the automatic driving vehicle transmits the generated target traveling track to the automatic driving support apparatus 50. Accordingly, the preceding vehicle track transmitting unit 53 basically transmits the received target traveling track of the preceding vehicle to the support object vehicle, excluding exceptions, such as the determination of the vehicle type. Accordingly, in the preceding vehicle side, the unnecessary target traveling track of the preceding vehicle can be suppressed from being transmitted to the automatic driving support apparatus 50 and the support object vehicle.

However, if the target track generation unit 36d of the automatic driving vehicle is configured to transmit the generated target traveling track to the automatic driving support apparatus 50 without setting any conditions in particular, the preceding vehicle track transmitting unit 53 may be configured to transmit the target traveling track of the preceding vehicle to the support object vehicle, when the specific transmission condition is established.

The transmission condition of the preceding vehicle track transmitting unit 53 may be set similar to the transmission condition of the target track generation unit 36d mentioned above. For example, when the lane change for avoiding the obstacle is included in the target traveling track of the preceding vehicle, the preceding vehicle track transmitting unit 53 transmits the target traveling track of the preceding vehicle to the support object vehicle. The method explained using FIG. 7 is used for determination of the presence or absence of the lane change, for example. The determination of the lane change for avoiding the obstacle is determined by whether there is an obstacle in a lane part which is avoided by the lane change. Alternatively, when the information that the lane change for avoiding the obstacle is included in the target traveling track is transmitted from the preceding vehicle together with the target traveling track, its information may be used.

### 1-3. Method and Program

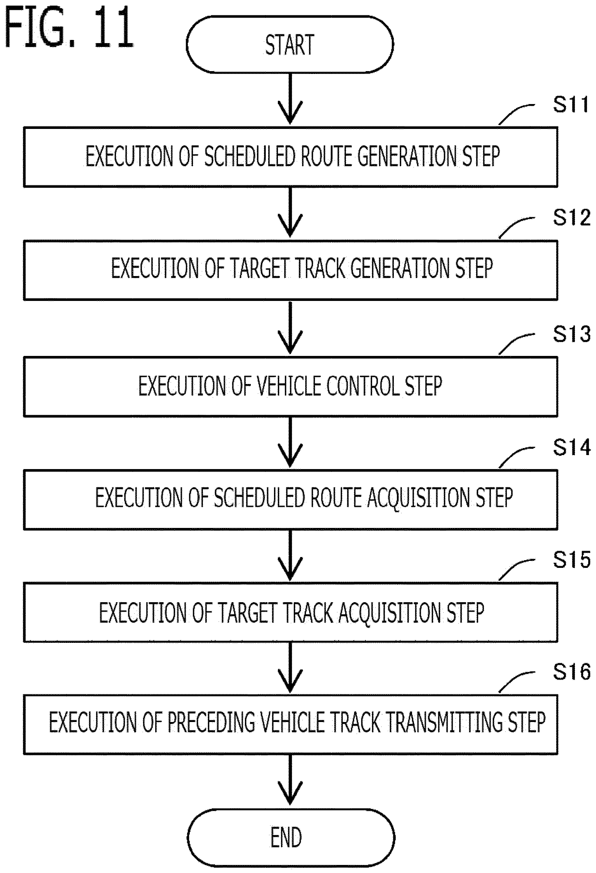

The procedure of processing (program and method) of the automatic driving and driving support system, the automatic driving support apparatus 50, and the automatic driving vehicle will be explained based on the flowchart shown in FIG. 11. The processing of the flowchart of FIG. 11 is executed by the arithmetic processor 90 (computer) of the automatic driving vehicle executing the automatic driving program 95 (software) stored in the storage apparatus 91 and by the arithmetic processor 70 (computer) of the automatic driving support apparatus 50 executing the automatic driving support program 75 (software) stored in the storage apparatus 71. The automatic driving program 95 stored in the non-transitory computer-readable recording medium 96 may be installed in the automatic driving vehicle (the storage apparatus 91). The automatic driving support program 75 stored in the non-transitory computer-readable recording medium 76 may be installed in the automatic driving support apparatus 50 (the storage apparatus 71). The steps S11 to S16 correspond to the automatic driving and driving support method; the steps S11 to S13 correspond to the automatic driving method and the automatic driving program 95; and the steps S14 to S16 corresponds to the automatic driving support method and the automatic driving support program 75.

In the step S11, as mentioned above, the automatic driving vehicle (the scheduled route generation unit 36a) executes a scheduled route generation step of generating the scheduled traveling route from the current point to the target point, and transmitting the generated scheduled traveling route to the automatic driving support apparatus 50.

In the step S12, as mentioned above, the automatic driving vehicle (the target track generation unit 36d) executes a target track generation step of generating the target traveling track for making the own vehicle follow, and transmitting the generated target traveling track to the automatic driving support apparatus 50. At this time, as described above, when the target traveling track of the preceding vehicle was acquired from the automatic driving support apparatus 50, the automatic driving vehicle (the target track generation unit 36d) generates the target traveling track of the own vehicle based on the acquired target traveling track of the preceding vehicle. On the other hand, when the target traveling track of the preceding vehicle is not acquired from the automatic driving support apparatus 50, the automatic driving vehicle (the target track generation unit 36d) generates the target traveling track of the own vehicle, based on the scheduled traveling route.

In the step S13, as mentioned above, the automatic driving vehicle (the vehicle control unit 36e) executes a vehicle control step of controlling the vehicle to follow the target traveling track of the own vehicle generated by the target track generation unit 36d.

In the step S14, as mentioned above, the automatic driving support apparatus 50 (the scheduled route acquisition unit 51) executes a scheduled route acquisition step of acquiring the scheduled traveling route from the current point to the target point, from each automatic driving vehicle.

In the step S15, as mentioned above, the automatic driving support apparatus 50 (the target track acquisition unit 52) executes a target track acquisition step of acquiring the target traveling track for making the own vehicle follow, from each automatic driving vehicle.

In the step S16, as mentioned above, when the target traveling track is acquired from the preceding vehicle which precedes and travels the same lane as the lane of the scheduled traveling route acquired from the support object vehicle which is the automatic driving vehicle set as the object for supporting automatic driving or the current traveling lane of the support object vehicle, the automatic driving support apparatus 50 (the preceding vehicle track transmitting unit 53) executes a preceding vehicle track transmitting step of transmitting the acquired target traveling track to the support object vehicle, and making the support object vehicle generate the target traveling track of the own vehicle based on the target traveling track of the preceding vehicle.

### 2. Embodiment 2

Next, the automatic driving and driving support system according to Embodiment 2 will be explained. The explanation for constituent parts the same as those in Embodiment 1 will be omitted. The basic configuration of the automatic driving and driving support system according to the present embodiment is the same as that of Embodiment 1. Embodiment 2 is different from Embodiment 1 in that the target track acquisition unit 52 stores the target traveling track acquired in the past, and the preceding vehicle track transmitting unit 53 transmits the target traveling track acquired in the past to the support object vehicle.

### <Target track acquisition unit 52>

In the present embodiment, the target track acquisition unit 52 stores the traveling locus or the target traveling track of the automatic driving vehicle which were acquired in the past, as the past target traveling track. The target track acquisition unit 52 also stores the vehicle type information with the past target traveling track. The past target traveling track is stored in the target traveling track database 56. According to this configuration, the information of not only the vehicle which is currently traveling in front of the support object vehicle, but also the vehicle which traveled the road in front of the support object vehicle in the past can be used. Accordingly, even when the vehicle is not traveling in front of the support object vehicle, the target traveling track of the preceding vehicle which traveled in the front in the past can be transmitted to the support object vehicle, and the support function of automatic driving can be increased.

The target track acquisition unit 52 stores the traveling locus or the target traveling track acquired in the past only during a preliminarily set storage period. The target track acquisition unit 52 stores only the traveling locus or the target traveling track most recently acquired about each road interval, and deletes storage of the traveling locus or the target traveling track acquired one time or more before. According to this configuration, the storage of the old traveling locus or the old target traveling track which has a high possibility that the road state, such as the state of the obstacle, was changed is deleted, and the target traveling track which does not coincide with the current road state can be suppressed from being transmitted to the support object vehicle.

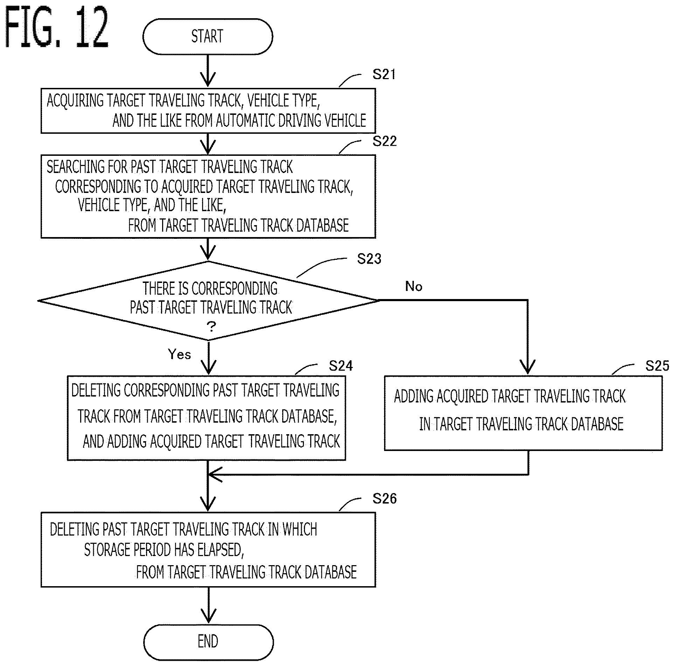

For example, the processing of target track acquisition and storage can be configured as the flowchart of FIG. 12. In the step S21, the target track acquisition unit 52 acquires the traveling locus or the target traveling track, and the vehicle type information from the automatic driving vehicle.

Then, in the step S22, the target track acquisition unit 52 searches for the past target traveling track stored about the same vehicle type as the vehicle type acquired this time in the road interval corresponding to the traveling locus or the target traveling track acquired this time, from the target traveling track database 56. For example, the target track acquisition unit 52 searches for the past target traveling track which has the position of the starting point and the position of the ending point which becomes within a determination distance of the position of the starting point and the position of the ending point of the traveling locus or the target traveling track acquired this time, from the target traveling track database 56.

Then, in the step S23, if the past target traveling track of the same road interval and the same vehicle type as the data acquired this time is stored in the target traveling track database 56, the target track acquisition unit 52 advances to the step S24, and if it is not stored, it advances to the step S25.

In the step S24, the target track acquisition unit 52 deletes the past target traveling track and the like of the same road interval and the same vehicle type which are stored in the target traveling track database 56, and stores the traveling locus or the target traveling track, the vehicle type information, and the acquisition time which were acquired this time, in the target traveling track database 56, as the information of the past target traveling track. On the other hand, in the step S25, the target track acquisition unit 52 stores the traveling locus or the target traveling track, the vehicle type information, and the acquisition time which were acquired this time, in the target traveling track database 56, as the information of the past target traveling track.

In the step S26, the target track acquisition unit 52 searches for the past target traveling track in which the storage period has elapsed, about the acquisition time of each past target traveling track stored in the target traveling track database 56, and deletes the information of the past target traveling track in which the storage period has elapsed, from the target traveling track database 56.

### <Preceding vehicle track transmitting unit 53>

In the present embodiment, the preceding vehicle track transmitting unit 53 transmits the past target traveling track stored in front of the same lane as the lane of the scheduled traveling route of the support object vehicle or the current traveling lane of the support object vehicle, to the support object vehicle, as the target traveling track of the preceding vehicle.

The preceding vehicle track transmitting unit 53 searches for the past target traveling track whose starting point exists in front of the same lane as the lane of the scheduled traveling route of the support object vehicle or the current traveling lane of the support object vehicle, from a plurality of the stored past target traveling tracks; and transmits the searched past target traveling track to the support object vehicle, as the target traveling track of the preceding vehicle. The preceding vehicle track transmitting unit 53 searches from the past target traveling tracks which exist within the object distance range in front of the current position of the support object vehicle.

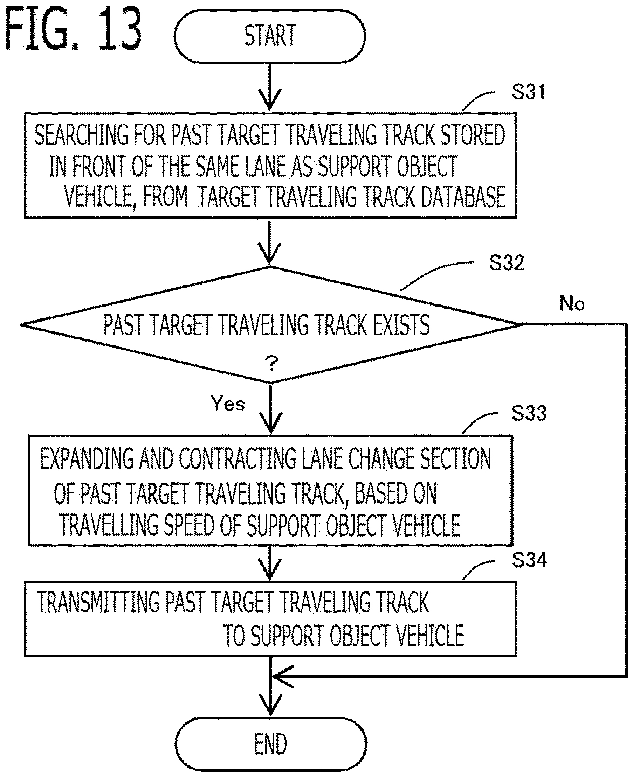

For example, processing of the preceding vehicle track transmitting can be configured as the flowchart of FIG. 13. In the step S31, the preceding vehicle track transmitting unit 53 searches for the past target traveling track stored in front of the same lane as the lane of the scheduled traveling route of the support object vehicle or the current traveling lane of the support object vehicle, from the target traveling track database 56. For example, the preceding vehicle track transmitting unit 53 searches for the past target traveling track whose lane is the same lane as the lane of the scheduled traveling route of the support object vehicle or the current traveling lane of the support object vehicle, and whose position of the starting point exists within the object distance range in front of the support object vehicle, from the target traveling track database 56. At this time, the preceding vehicle track transmitting unit 53 searches for the past target traveling track of the same vehicle type as the vehicle type of the support object vehicle.

In the step S32, the preceding vehicle track transmitting unit 53 determines whether the corresponding past target traveling track exists as the result of search. When it exists, it advances to the step S33, and when it does not exist, processing is ended, without transmitting the target traveling track of the preceding vehicle to the support object vehicle.

In the step S33, similar to Embodiment 1, the preceding vehicle track transmitting unit 53 calculates the target lane change distance by multiplying the travelling speed of the support object vehicle to the preliminarily set target lane change period. Then, when the lane change is included in the searched past target traveling track, the search track transmitting unit 53 corrects the searched past target traveling track traveling track, to a traveling track that changes lane from a point before a completion point of the lane change by the target lane change distance.

Then, in the step S34, the preceding vehicle track transmitting unit 53 transmits the past target traveling track corrected in the step S33, or the past target traveling track not corrected in the step S33, to the support object vehicle. At this time, similar to Embodiment 1, when the lane change for avoiding the obstacle is included in the past target traveling track, the preceding vehicle track transmitting unit 53 may transmit the past target traveling track to the support object vehicle, as the target traveling track of the preceding vehicle.

The processing of the target track acquisition unit 52 of the step S15 in the flowchart of FIG. 11 explained in Embodiment 1 and the processing of the preceding vehicle track transmitting unit 53 of the step S16 are changed into the processing explained in the present embodiment.

Although the present disclosure is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

3: Network, 36a: Scheduled route generation unit, 36c: Preceding vehicle track acquisition unit, 36d: Target track generation unit, 50: Automatic driving support apparatus, 51: Scheduled route acquisition unit, 52: Target track acquisition unit, 53: Preceding vehicle track transmitting unit, 75: Automatic driving support program, 95: Automatic driving program

## Claims

1. An automatic driving and driving support system, comprising:
a plurality of automatic driving vehicles driving automatically, and
an automatic driving support apparatus supporting automatic driving of the plurality of automatic driving vehicles,
wherein the automatic driving vehicle comprising:
a scheduled route generation unit that generates a scheduled traveling route from a current point to a target point, and transmits the generated scheduled traveling route to the automatic driving support apparatus, and
a target track generation unit that generates a target traveling track for making an own vehicle follow, and transmits the generated target traveling track to the automatic driving support apparatus,
wherein the automatic driving support apparatus comprising:
a scheduled route acquisition unit that acquires the scheduled traveling route from the automatic driving vehicle,
a target track acquisition unit that acquires the target traveling track from the automatic driving vehicle, and
a preceding vehicle track transmitting unit that, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmits the acquired target traveling track to the support object vehicle,
wherein the target track generation unit, when the target traveling track of the preceding vehicle is acquired from the automatic driving support apparatus, generates the target traveling track of the own vehicle based on the acquired target traveling track of the preceding vehicle.

2. The automatic driving and driving support system according to claim 1,
wherein, when generating the target traveling track for changing lane, the target track generation unit transmits the generated target traveling track to the automatic driving support apparatus.

3. The automatic driving and driving support system according to claim 1 or 2,
wherein, when detecting an obstacle in front of the traveling lane of the own vehicle, and generating the target traveling track for changing lane for avoiding the obstacle, the target track generation unit transmits the generated target traveling track to the automatic driving support apparatus.

4. The automatic driving and driving support system according to any one of claims 1 to 3,
wherein, when a vehicle type of the support object vehicle and a vehicle type of the preceding vehicle coincide with each other, the preceding vehicle track transmitting unit transmits the target traveling track of the preceding vehicle to the support object vehicle.

5. The automatic driving and driving support system according to any one of claims 1 to 4,
wherein the target track acquisition unit stores a traveling locus or the target traveling track of the automatic driving vehicle which were acquired in the past, as a past target traveling track, and
wherein the preceding vehicle track transmitting unit transmits the past target traveling track stored in front of the same lane as a lane of the scheduled traveling route of the support object vehicle or a current traveling lane of the support object vehicle, to the support object vehicle, as the target traveling track of the preceding vehicle.

6. The automatic driving and driving support system according to claim 5,
wherein the target track acquisition unit stores the traveling locus or the target traveling track which were acquired in the past, only during a preliminarily set storage period.

7. The automatic driving and driving support system according to claim 5 or 6,
wherein the preceding vehicle track transmitting unit searches for the past target traveling track whose starting point exists in front of the same lane as a lane of the scheduled traveling route of the support object vehicle or a current traveling lane of the support object vehicle, from a plurality of the stored past target traveling tracks; and transmits the searched past target traveling track to the support object vehicle, as the target traveling track of the preceding vehicle.

8. The automatic driving and driving support system according to any one of claims 1 to 7,
wherein the preceding vehicle track transmitting unit calculates a target lane change distance by multiplying a speed of the support object vehicle to a preliminarily set target lane change period; and
when a lane change is included in the target traveling track of the preceding vehicle, corrects the target traveling track of the preceding vehicle, to a traveling track that changes lane from a point before a completion point of lane change by the target lane change distance, and transmits the target traveling track of the preceding vehicle after correction to the support object vehicle.

9. The automatic driving and driving support system according to any one of claims 1 to 8,
wherein the automatic driving support apparatus is provided in a server connected to a network, and
wherein, when the target traveling track of the preceding vehicle includes a lane change for avoiding an obstacle, the preceding vehicle track transmitting unit transmits the target traveling track of the preceding vehicle to the support object vehicle.

10. An automatic driving support apparatus, comprising:
a scheduled route acquisition unit that acquires a scheduled traveling route from an automatic driving vehicle,
a target track acquisition unit that acquires a target traveling track from the automatic driving vehicle, and
a preceding vehicle track transmitting unit that, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmits the acquired target traveling track of the preceding vehicle to the support object vehicle, and makes the support object vehicle generate the target traveling track of an own vehicle based on the target traveling track of the preceding vehicle.

11. An automatic driving vehicle, comprising:
a scheduled route generation unit that generates a scheduled traveling route from a current point to a target point, and transmits the generated scheduled traveling route to an automatic driving support apparatus,
a target track generation unit that generates a target traveling track for making an own vehicle follow, and transmits the generated target traveling track to the automatic driving support apparatus, and
a preceding vehicle track acquisition unit that acquires the target traveling track of a preceding vehicle which is an other vehicle which precedes and travels the same lane as a lane of the scheduled traveling route or a current traveling lane of the own vehicle, from the automatic driving support apparatus,
wherein, when the target traveling track of the preceding vehicle is acquired, the target track generation unit generates the target traveling track of the own vehicle based on the acquired target traveling track of the preceding vehicle.

12. An automatic driving and driving support method using a plurality of automatic driving vehicles driving automatically, and an automatic driving support apparatus supporting automatic driving of the plurality of automatic driving vehicles, the automatic driving and driving support method, comprising:
a scheduled route generation step of generating a scheduled traveling route from a current point to a target point, and transmitting the generated scheduled traveling route to the automatic driving support apparatus, by the automatic vehicle,
a target track generation step of generating a target traveling track for making an own vehicle follow, and transmitting the generated target traveling track to the automatic driving support apparatus, by the automatic vehicle,
a scheduled route acquisition step of acquiring the scheduled traveling route from the automatic driving vehicle, by the automatic driving support apparatus,
a target track acquisition step of acquiring the target traveling track from the automatic driving vehicle, by the automatic driving support apparatus, and
a preceding vehicle track transmitting step of, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmitting the acquired target traveling track to the support object vehicle,
wherein, in the target track generation step, when the target traveling track of the preceding vehicle is obtained from the automatic driving support apparatus, generating the target traveling track of the own vehicle based on the acquired target traveling track of the preceding vehicle, by the automatic driving vehicle.

13. An automatic driving support method, comprising:
a scheduled route acquisition step of acquiring a scheduled traveling route from a current point to a target point, from an automatic driving vehicle,
a target track acquisition step of acquiring a target traveling track for making an own vehicle follow, from an automatic driving vehicle, and
a preceding vehicle track transmitting step of, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmitting the acquired target traveling track of the preceding vehicle to the support object vehicle, and making the support object vehicle generate the target traveling track of own vehicle based on the target traveling track of the preceding vehicle.

14. An automatic driving method, comprising:
a scheduled route generation step of generating a scheduled traveling route from a current point to a target point, and transmitting the generated scheduled traveling route to an automatic driving support apparatus, and
a target track generation step of generating a target traveling track for making an own vehicle follow, and transmitting the generated target traveling track to the automatic driving support apparatus,
wherein, in the target track generation step, when the target traveling track of a preceding vehicle which precedes and travels the same lane as a lane of the scheduled traveling route or a current traveling lane of the own vehicle is acquired from the automatic driving support apparatus, generating the target traveling track of the own vehicle based on the acquired target traveling track of the preceding vehicle.

15. An automatic driving support program that causes a computer to execute:
a scheduled route acquisition step of acquiring a scheduled traveling route from a current point to a target point, from an automatic driving vehicle,
a target track acquisition step of acquiring a target traveling track for making an own vehicle follow, from an automatic driving vehicle, and
a preceding vehicle track transmitting step of, when the target traveling track is acquired from a preceding vehicle which precedes and travels the same lane as a lane of the scheduled traveling route acquired from a support object vehicle which is the automatic driving vehicle set as an object for supporting automatic driving or a current traveling lane of the support object vehicle, transmitting the acquired target traveling track of the preceding vehicle to the support object vehicle, and making the support object vehicle generate the target traveling track of own vehicle based on the target traveling track of the preceding vehicle.

16. An automatic driving program that causes a computer to execute:
a scheduled route generation step of generating a scheduled traveling route from a current point to a target point, and transmitting the generated scheduled traveling route to an automatic driving support apparatus, and
a target track generation step of generating a target traveling track for making an own vehicle follow, and transmitting the generated target traveling track to the automatic driving support apparatus,
wherein, in the target track generation step, when the target traveling track of a preceding vehicle which precedes and travels the same lane as a lane of the scheduled traveling route or a current traveling lane of the own vehicle is acquired from the automatic driving support apparatus, generating the target traveling track of the own vehicle based on the acquired target traveling track of the preceding vehicle.
